# EUROPEAN PATENT SPECIFICATION

(11) **EP 2 991 361 B1**
(45) Date of publication and mention of the grant of the patent: **18.04.2018**
(21) Application number: 14806858.8
(22) Date of filing: 04.06.2014
(51) Int. Cl.: H04N 21/4623, H04N 21/433, H04N 21/438

(54) **METHOD, DEVICE, AND SYSTEM FOR IMPROVING CHANNEL CHANGE SPEED**
VERFAHREN, VORRICHTUNG UND SYSTEM ZUR VERBESSERUNG DER KANALWECHSELGESCHWINDIGKEIT
MÉTHODE, DISPOSITIF ET SYSTÈME D'AMÉLIORATION DE VITESSE DE CHANGEMENT DE CHAÎNE

(30) Priority: 07.06.2013 CN 201310225818
(43) Date of publication of application: 02.03.2016
(73) Proprietor: Huawei Device Co., Ltd., Shenzhen, Guangdong 518129 (CN)
(72) Inventor: HUANG, Wei, Shenzhen, Guangdong 518129 (CN)
(74) Representative: Pfenning, Meinig & Partner mbB
(86) International application number: PCT/CN2014/079116
(87) International publication number: WO 2014/194814

(56) References cited:
- EP-A1- 1 705 915
- CN-A- 101 035 263
- CN-A- 101 277 450
- CN-A- 102 595 236
- CN-A- 103 297 852
- US-A1- 2005 201 559
- US-A1- 2006 085 828
- US-A1- 2009 183 196

## Description

### TECHNICAL FIELD

The present invention relates to the field of electronic terminal applications, and in particular, to a method, an apparatus, and a system for improving a channel switching speed.

### BACKGROUND

As digital televisions are being widely used, a user can watch an increasing number of programs, posing increasingly high requirements on performance of a set-top box. During use of a set-top box, channel switching is the most common operation, and time consumed in channel switching directly affects user experience. Operations performed during channel switching include a series of processes, such as, stopping a currently played program, locking a frequency of a target program, receiving a PSI (English: Program Specific Information, Chinese: program specific information) table required by a program playlist, CA (English: Conditional Access, Chinese: conditional access) authentication/descrambling, adults-only rating/output port copyright control, audio and video decoding, and audio and video output control. All these processes need to consume time, so that a user can complete channel switching only after waiting for a long time. Therefore, it is necessary to improve a channel switching speed, to save user's time.

To resolve the foregoing problem, in the prior art, a channel switching speed is improved by shortening time consumed in aspects of locking a frequency and buffering an auxiliary data PSI table. For example, by improving a speed of a frequency locking operation, buffering PSI table data at a same frequency, shortening a time for waiting for PSI table data during channel switching at a same frequency, and completing a frequency locking operation on an adjacent channel by using an idle low noise block, a frequency locking time for cross-frequency channel switching is shortened.

During implementation of the foregoing solution, the inventor finds that the prior art has at least the following problems: for the foregoing channel switching operation procedure, the time consumed in aspects of locking a frequency and buffering an auxiliary data PSI table accounts for a small proportion in the channel switching operation procedure, that is, improvement made in the prior art on a channel switching speed is very limited, and efficiency of device is still very low.

US 2006/0085828A discloses buffering control words to reduce delay between selecting a channel and displaying the selected channel.

EP 1705915A discloses that a control message "flow (ECM) is received according to the list of the accessible channels, where the messages comprise the control word permitting to decrypt data of an encrypted data flow corresponding to an adjacent channel.

US2009/0183196A discloses a method for channel switching including bundling entitlement control messages (ECMs) to generate bundled ECMs that comprise decryption keys associated with a first content channel and one or more additional content channels, respectively, and transmitting the bundled ECMs with the first content channel, to reduce channel switching time. D3 also has the similar technical purpose as D1.

US2005/0201559A also mentions buffering multiple control words for descrambling more than one data streams to enable fast selection of a new channel.

### SUMMARY

Embodiments of the present invention" provide a method, an apparatus, and a system, as defined in the presently independent claims, for improving a channel switching speed, which saves a channel switching time, and improves device efficiency.

To achieve the foregoing objective, the following technical solutions are used in the embodiments of the present invention:

According to a first aspect, a method for improving a channel switching speed is provided, where the method includes:
acquiring first information of a preset channel,
where the first information includes at least one type of the following: conditional access CA authentication information, adults-only rating information, and output port copyright control information that correspond to the preset channel;
receiving a switching instruction input by a user, where the switching instruction indicates switching to a target channel; and
when it is determined that the target channel is included in the preset channel, outputting audio and video information of the target channel according to the switching instruction and the first information, so that a multimedia playback device plays the audio and video information of the target channel.

In a first possible implementation manner of the first aspect, the preset channel includes adjacent channels of a currently played channel.

With reference to the first aspect and the first possible implementation manner of the first aspect, in a second possible implementation manner of the first aspect, the method further includes: acquiring audio and video information of the preset channel; and
after the first information of the preset channel is acquired, descrambling and buffering the audio and video information of the preset channel.

With reference to the first aspect, the first possible implementation manner of the first aspect, and the second possible implementation manner of the first aspect, in a third possible implementation manner of the first aspect, the method further includes:
selecting a start position for playback, where the start position indicates a position from which an image group that is closest to a current playback time and can be used for decoding starts.

With reference to the first aspect, the first possible implementation manner of the first aspect, the second possible implementation manner of the first aspect, and the third possible implementation manner of the first aspect, in a fourth possible implementation manner of the first aspect, the method further includes:
decoding the audio and video information of the target channel, and outputting decoded audio and video information of the target channel.

According to a second aspect, an apparatus for improving a channel switching speed is provided, where the apparatus includes:
an acquisition unit, configured to acquire first information of a preset channel,
where the first information includes at least one type of the following: conditional access CA authentication information, adults-only rating information, and output port copyright control information that correspond to the preset channel;
a receiving unit, configured to receive a switching instruction input by a user, where the switching instruction indicates switching to a target channel; and
an output unit, configured to: when it is determined that the target channel is included in the preset channel, output audio and video information of the target channel according to the switching instruction received by the receiving unit and the first information acquired by the acquisition unit, so that a multimedia playback device plays the audio and video information of the target channel.

In a first possible implementation manner of the second aspect, the preset channel includes adjacent channels of a currently played channel.

With reference to the second aspect and the first possible implementation manner of the second aspect, in a second possible implementation manner of the second aspect,
the acquisition unit is further configured to acquire audio and video information of the preset channel; and
the apparatus further includes: a processing unit, configured to: after the acquisition unit acquires the first information of the preset channel, descramble and buffer the audio and video information of the preset channel.

With reference to the second aspect, the first possible implementation manner of the second aspect, and the second possible implementation manner of the second aspect, in a third possible implementation manner of the second aspect, the output unit includes:
a selection subunit, configured to select a start position for playback, where the start position indicates a position from which an image group that is closest to a current playback time and can be used for decoding starts.

With reference to the second aspect, the first possible implementation manner of the second aspect, the second possible implementation manner of the second aspect, and the third possible implementation manner of the second aspect, in a fourth possible implementation manner of the second aspect,
the processing unit is further configured to decode the audio and video information of the target channel in the audio and video information of the preset channel that is acquired by the acquisition unit; and
the output unit is specifically configured to output audio and video information of the target channel that is obtained after the decoding by the processing unit.

According to a third aspect, a system for improving a channel switching speed is provided, where the system includes the apparatus for improving a channel switching speed according to the second aspect and any one of the possible implementation manners of the second aspect and a multimedia playback device, where the multimedia playback device is configured to play audio and video information that is output by the apparatus for improving a channel switching speed.

According to the method, the apparatus, and the system for improving a channel switching speed that are provided in the embodiments of the present invention, before a switching instruction input by a user is received, CA authentication information, adults-only rating information, and output port copyright control information of a preset channel are acquired, audio and video information of the preset channel is descrambled and buffered, and when a target channel indicated by the received switching instruction is included in the preset channel, audio and video information of the target channel is decoded and decoded audio and video information is output. However, in the prior art, a channel switching speed can be improved only by shortening a very short time in a channel switching process. In the embodiments of the present invention, for a procedure consuming a lot of time in the channel switching process, a channel switching time is further shortened, thereby significantly improving the channel switching speed.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a channel switching operation procedure according to an embodiment of the present invention;
FIG. 2 is a flowchart of a method for improving a channel switching speed according to an embodiment of the present invention;
FIG. 3 is a flowchart of a method in a buffering stage according to another embodiment of the present invention;
FIG. 4 is a flowchart of a method in a playback stage according to another embodiment of the present invention;
FIG. 5 is a schematic diagram of a principle of performing a channel switching operation by a set-top box according to another embodiment of the present invention;
FIG. 6 is a schematic diagram of another principle of performing a channel switching operation by a set-top box according to another embodiment of the present invention;
FIG. 7 is a schematic composition diagram of an apparatus for improving a channel switching speed according to another embodiment of the present invention;
FIG. 8 is a schematic composition diagram of another apparatus for improving a channel switching speed according to another embodiment of the present invention;
FIG. 9 is a schematic composition diagram of another apparatus for improving a channel switching speed according to another embodiment of the present invention; and
FIG. 10 is a schematic composition diagram of a system for improving a channel switching speed according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The present invention provides a method for improving a channel switching speed, which overcomes a disadvantage of excessive time consumption of CA authentication, adults-only rating, and decoding during audio and video playback. A specific implementation manner is that: when a current program is played, audio and video information of a preset channel may be recorded into a buffer in advance, and in this way, when a switching instruction that is sent by a user and indicates switching to the preset channel is received, first information and the audio and video information of the preset channel that are stored and/or buffered are directly acquired, so that playback of a program indicated by the switching instruction is performed. Therefore, before the switching instruction indicating switching to the preset channel is received, it is ensured in the background that program playback of the target channel is in a ready state, which can significantly improve a channel switching speed.

In the embodiments of the present invention, a preset channel includes adjacent channels of a currently played channel. The adjacent channels refer to channels whose logical channel numbers are adjacent to that of the currently played channel, and are generally two channels. For example, channels are numbered in a sequence of N1, N2, N3, N4, ..., the currently played channel is N2, and channels adjacent to N2 is N1 and N3. During a practical application process, that a user switches channels by pressing up and down keys is the most common channel switching method, and the adjacent channels refer to channels indicated by up and down keys of the currently played channel. Because a behavior of directly switching channels by the user by pressing a number key is unpredictable, that is, in this case, a target channel indicated by a switching instruction is uncertain, and to save storage space and improve working efficiency of a device, it is unnecessary to classify all channels into the preset channel. In the embodiments of the present invention, preset channels are preferably adjacent channels, and the adjacent channels are two channels whose logical channel numbers are adjacent to that of the currently played channel.

Further, to ensure that buffering of the adjacent channels can always be normally performed, during a buffering process, except situations of a resource acquisition failure and a CA authentication error, to-be-played audio and video information is unconditionally buffered, adults-only rating information and output port copyright control information are recorded, and after the user sends a switching instruction indicating switching to the preset channel, the adults-only rating information and the output port copyright control information are then processed together, that is, both the adults-only rating information and the output port copyright control information that are mentioned above are processed during playback.

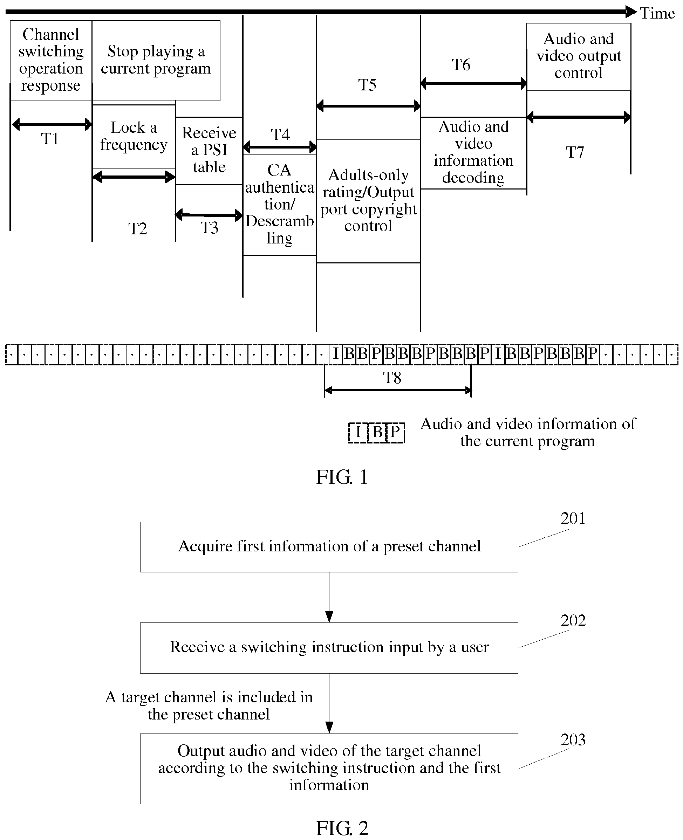

Optionally, a channel switching operation further includes the following procedures: a channel switching operation response, stopping a currently played program, CA authentication/descrambling, adults-only rating/output port copyright restriction, audio and video decoding, and audio and video output control, where the stopping a currently played program includes: locking a frequency and receiving a PSI table. As shown in FIG. 1, the foregoing procedures are represented in a timeline, it is assumed that the channel switching operation response, locking a frequency, receiving a PSI table, CA authentication/descrambling, adults-only rating/output port copyright restriction, audio and video information decoding, and audio and video output control are respectively represented by T1, T2, ..., and T7, and it is assumed that T8 is audio and video information of a current program. Specifically, during a practical application process, a value of time consumed by each procedure of the channel switching process can be learned. For example, as shown in FIG. 1, the T2 time and the T3 time relate to a time consumed in locking a frequency and buffering an auxiliary data PSI table, which is about 0.5 second. However, in the prior art, during the channel switching process, a process that consumes the longest time, that is, the CA authentication/descrambling represented by T4, adults-only rating/output port copyright control represented by T5, and audio and video decoding represented by T6, is not improved, and a time required by the several operations is greater than 1.5 seconds.

It should be noted that, to decode buffered audio and video data of a specified channel as fast as possible, and control a sense of lag caused by playback, when playback of a target channel is started, a start position for playback needs to be determined first, and a target program is started to be played by using an image group (a sequence) that is closest to a current playback time and can be used for decoding and outputting as the start position. With reference to the description of FIG. 1, a specific explanation of "an image group (a sequence) that is closest to a current playback time and can be used for decoding and outputting" is: in FIG. 1, T8 represents a smallest played image group, and if receiving of an image group following T8 is not completed, an image group within a range of T8 is "an image group (a sequence) that is closest to a current time and can be used for decoding and outputting" described herein.

An embodiment of the present invention provides a method for improving a channel switching speed. As shown in FIG. 2, the method includes:
201: Acquire first information of a preset channel.

The first information includes at least one type of the following: CA authentication information, adults-only rating information, and output port copyright control information that correspond to the preset channel, and further includes any one type or several types of the other types of information according to an actual situation.

Preferably, preset channels are adjacent channels of a currently played channel. The adjacent channels refer to two channels whose logical channel numbers are adjacent to that of the currently played channel. A logical channel number is used to rank channels.
202: Receive a switching instruction input by a user.

The switching instruction indicates switching to a target channel.

Optionally, after the switching instruction is received, it is determined whether the target channel indicated by the switching instruction is included in the preset channel mentioned in 201, and when it is determined that the target channel is included in the preset channel, the following 203 is performed.

It should be noted that, the switching instruction includes a logical channel number of the target channel, and with reference to the foregoing description of the preset channel, that is, the preset channels are two channels whose logical channel numbers are adjacent to that of the currently played channel, a logical channel number of the preset channel may be acquired. Then, the logical channel number of the target channel and the logical channel numbers of the preset channels are compared, and if a part of the logical channel number of the target channel is the same as a part of the logical channel numbers of the preset channels, it is determined that the target channel is included in the preset channels.
203: Output audio and video information of the target channel according to the switching instruction and the first information, so that a multimedia playback device plays the audio and video information of the target channel.

Optionally, the method further includes acquiring audio and video information of the preset channel, where the audio and video information is media data of the preset channel, and the audio and video information can be simply described as audio and video information. Preferably, before the first information is acquired, the audio and video information of the preset channel is acquired. Further, after the first information of the preset channel is acquired, the audio and video information of the preset channel is descrambled and buffered according to the first information. In addition, when the target channel indicated by the received switching instruction is included in the preset channel, the audio and video information of the target channel is decoded, and then decoded audio and video information of the target channel are output. The process is described in detail in the next embodiment.

Specifically, the outputting, according to the first information acquired in 201, audio and video information of the target channel indicated by the switching instruction includes: determining whether a CA authentication error occurs according to the acquired CA authentication information; after it is determined that no CA authentication error occurs or a CA authentication error is removed, detecting whether a program of the preset channel indicated by the switching instruction is restricted by adults-only rating; when it is determined that the program is not restricted by adults-only rating or adults-only rating is removed, acquiring buffered audio and video information; determining a start position for playback, and then determining whether a copyright of an output port of the audio and video information is controlled, and after the copyright of the output port is not controlled or control of the copyright of the output port is removed, decoding the audio and video information and outputting decoded audio and video information, to implement playback of the audio and video information. It should be noted that, the procedure of outputting the audio and video information according to the switching instruction and the first information is described in detail in 401 to 405 of the next embodiment.

Optionally, before the audio and video information of the target channel is output, the start position for playback needs to be selected, and the start position indicates a position from which an image group that is closest to a current playback time and can be used for decoding starts, that is, a position of T8 in FIG. 1.

According to the method for improving a channel switching speed provided in this embodiment of the present invention, before a switching instruction input by a user is received, CA authentication information, adults-only rating information, and output port copyright control information of a preset channel are acquired, audio and video information of the preset channel is descrambled and buffered, and when a target channel indicated by the received switching instruction is included in the preset channel, audio and video information of the target channel is decoded and decoded audio and video information is output. However, in the prior art, a channel switching speed can be improved only by shortening a short time in a channel switching process. In this technical solution of the present invention, during the channel switching process, for a procedure consuming a lot of time in the channel switching process, a channel switching time is further shortened, thereby significantly improving the channel switching speed.

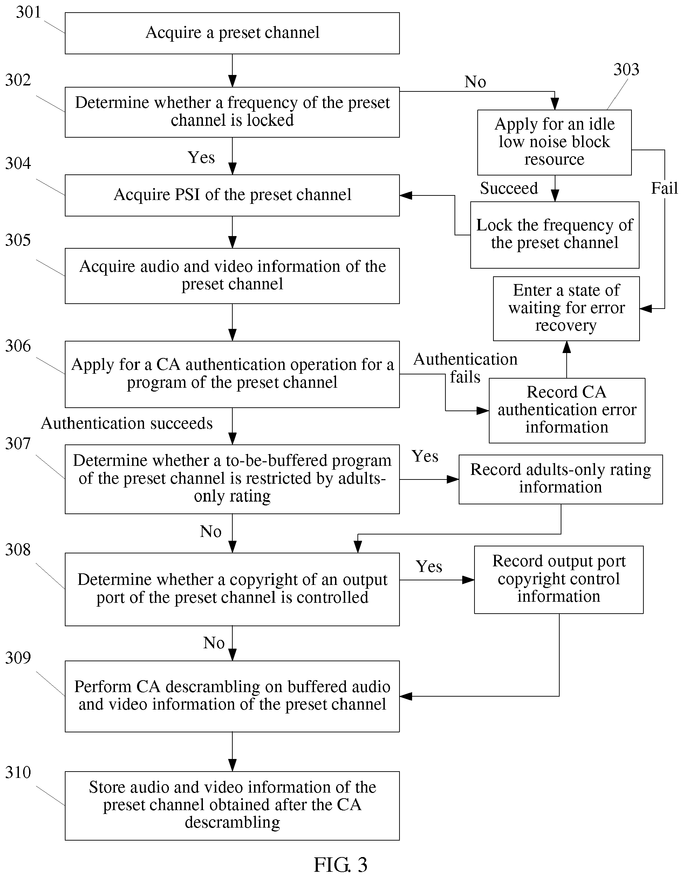

Another embodiment of the present invention provides a method for improving a channel switching speed. During a specific implementation process, the method includes two stages, a buffering stage and a playback stage. As shown in FIG. 3, the buffering stage includes:
301: Acquire a preset channel.

The preset channel is the same as related content described in 201 in the foregoing embodiment, and is not described herein again.
302: Determine whether a frequency of the preset channel is locked.

It should be noted that, when the frequency of the preset channel is not locked, 303 is performed; when the frequency of the preset channel is locked, 304 is performed.
303: Apply for an idle low noise block resource.

Further, when the application succeeds, the frequency is locked; when the application fails, a state of waiting for error recovery is entered. Then, whether a low noise block resource is idle is periodically checked; after a low noise block is successfully acquired, the frequency of the preset channel is continuously locked. After the frequency is successfully locked, 304 is performed. A period for checking whether a low noise block resource is idle may be set by a system or a user.

Preferably, an idle low noise block resource is applied for from a low noise block resource management module, where the low noise block resource management module is a functional module in charge of resolving a low noise block resource conflict, and an idle low noise block resource is used to lock the frequency of the preset channel.
304: Acquire PSI of the preset channel.
305: Acquire audio and video information of the preset channel.

It should be noted that, 305 is acquiring and filtering the audio and video information of the preset channel, that is, audio and video information of a program of the preset channel is locally buffered, and the step may also be referred to as a time shifting buffering process of the program of the preset channel.
306: Apply for a CA authentication operation for the program of the preset channel.

Preferably, a CA authentication operation is applied for from a condition receiving management module.

Further, if CA authentication fails, a buffered channel on which an error occurs is stopped, an error type is recorded, and immediately a state of waiting for error recovery is entered, so that CA authentication information is acquired, and 307 is performed after a CA authentication error is removed; if CA authentication succeeds, 307 is directly performed.

Optionally, the acquired CA authentication information may include the following two situations:
a first situation: the acquired CA authentication information is information that CA authentication fails; and
a second situation: the acquired CA authentication information is information that CA authentication succeeds.

Preferably, in this embodiment, description is made by using the second situation as an example. In addition, it should be noted that, when the information that CA authentication fails is acquired, the following operation cannot be performed unless the error state is recovered.
307: Determine whether a to-be-buffered program of the preset channel is restricted by adults-only rating.

The to-be-buffered program is restricted by adults-only rating, that is, the to-be-buffered program cannot be played immediately.

Preferably, whether the to-be-buffered program is restricted by adults-only rating is determined by intercepting adults-only rating information of the to-be-buffered program.

Further, when it is determined that the to-be-buffered program is restricted by adults-only rating, the to-be-buffered program is continuously buffered, and the adults-only rating information is recorded, so that the adults-only rating information is acquired; when it is determined that the to-be-buffered program is not restricted by adults-only rating, 308 is performed.

Optionally, the acquired adults-only rating information may further be information that the to-be-buffered program is not restricted by adults-only rating. In this embodiment, description is made by using an example in which the adults-only rating information is information that the to-be-buffered program is restricted by adults-only rating.
308: Determine whether a copyright of an output port of the preset channel is controlled.

Specifically, output port copyright control information of the program may be intercepted while the adults-only rating information of the to-be-buffered program is intercepted.

Further, when it is determined that the copyright of the output port is controlled, the output port copyright control information is saved, that is, output port copyright control information of the channel is acquired, and the output port control information is used when playback is subsequently performed; when it is determined that the copyright of the output port is not controlled, 309 is performed.

Optionally, the acquired output port copyright control information may further be information that it is determined that the copyright of the output port is not controlled. In this embodiment, description is made by using an example in which it is determined that the copyright of the output port is controlled.
309: Perform CA descrambling on buffered audio and video information of the preset channel.

Preferably, the descrambling on the audio and video information of the preset channel is completed by using the condition receiving management module.

It should be noted that, CA scrambling refers to scrambling a bitstream of the audio and video information, and mainly refers to performing an operation on some data in the bitstream, to interrupt an original order. If descrambling is not performed according to a predetermined protocol, the audio and video information cannot be correctly output. CA descrambling is a reverse procedure relative to the CA scrambling.
310: Store audio and video information of the preset channel obtained after the CA descrambling.

The storing audio and video information of the preset channel refers to a process of buffering the audio and video information obtained after the CA descrambling.

It should be noted that, according to specific requirements of a manufacturer, secondary encryption needs to be performed on the audio and video information obtained after the CA descrambling, which however, does not affect a decoding and playback speed. For example, Nagra CA requires that secondary encryption be performed on all recorded programs, to prevent recorded content from being copied.

The foregoing 301 to 310 correspond to the buffering stage of the preset channel, and the stage is for playing a current channel program. Before a switching instruction of a user is received, the first information of the preset channel that includes the CA authentication information, the adults-only rating information, and the output port copyright control information is first buffered in this stage, and when the target channel indicated by the received switching instruction is included in the preset channel, the buffered first information of the target channel may be directly acquired. In this way, there is no need to acquire the first information after the switching instruction input by the user is received, which saves a lot of time, and improves working efficiency of a device when switching to the preset channel is performed.

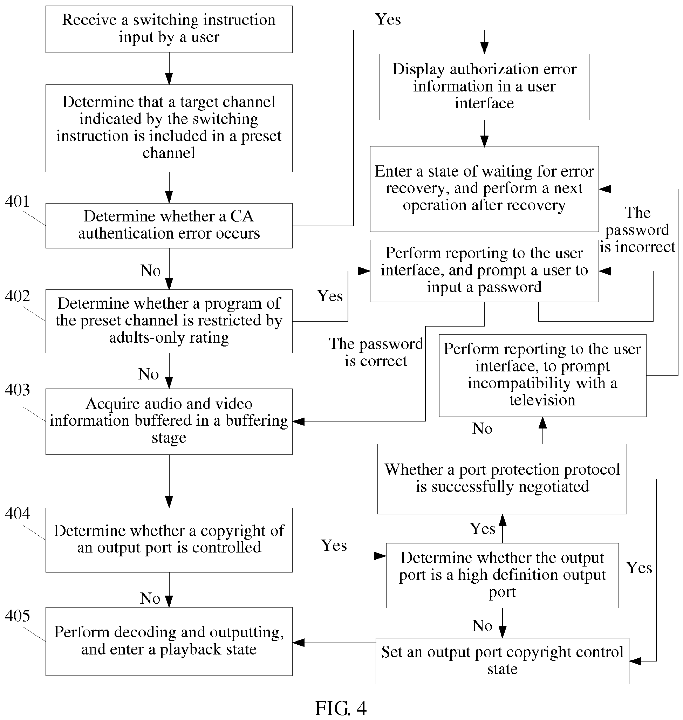

After 310 is completed, and the switching instruction input by the user is received, a currently played program is stopped first, and then the playback stage is entered. Before the playback stage is entered, whether the target channel indicated by the switching instruction is included in the preset channel, that is, whether the target channel starts time shifting buffering, needs to be determined. It can be known from the foregoing buffering stage that, both the first information and the audio and video information of the preset channel are buffered, and when it is determined that the target channel starts the time shifting buffering, a subsequent playback procedure is performed. It should be noted that, with reference to the description of 305, after the audio and video information of the program of the preset channel is received and filtered, it indicates that the preset channel starts the time shifting buffering. As shown in FIG. 4, the playback stage includes:
401: Determine whether a CA authentication error occurs.

Specifically, if a CA authentication error occurs, corresponding authorization error information is displayed in a user interface, current playback is in a state of waiting for error recovery, and 402 is performed after the CA authentication error is removed or when it is determined that the CA authentication error does not exist.

Preferably, in this determining procedure, information such as the error type recorded with reference to 306 is displayed in the user interface.
402: Determine whether a program of a preset channel is restricted by adults-only rating.

Preferably, whether the program of the preset channel is restricted by adults-only rating is checked by using the adults-only rating information recorded in 307.

Specifically, if the program is restricted by adults-only rating, reporting is performed to the user interface, to prompt the user to input a password. After the user inputs a correct password, 403 can be performed. If the input password is incorrect, the user interface returns to a page prompting the user to input a password, until the correct password or a new switching instruction is received.
403: Acquire audio and video information buffered in the foregoing buffering stage.

Further, a location of an image group (a sequence) that is closest to a current playback time and can be used for decoding is first determined according to video data, and then audio and video information following the location is filtered. The image group (the sequence) that is closest to the current playback time and can be used for decoding is the same as related content described in 203, and is not described herein again.
404: Determine whether a copyright of an output port is controlled.

It should be noted that, the determining whether a copyright of an output port is controlled is determining whether there is a protection requirement on the copyright of the output port. Protection of a standard definition output port can be directly set, and for high definition output, whether a port protection protocol is successfully negotiated needs to be checked. If the port protection protocol is unsuccessfully negotiated, reporting is performed to the user interface to prompt incompatibility with a television, playback enters an error waiting state, and 405 is performed after a fault is rectified.

Specifically, it is determined whether the output port is a high definition output port; when it is determined that the output port is a high definition output port, it is determined whether the port protection protocol is successfully negotiated. When the protection protocol is successfully negotiated, a control state of the copyright of the output port is set; when it is determined that the protection protocol is unsuccessfully negotiated, the situation needs to be reported to the user interface, incompatibility with a television is displayed, then the state of waiting for error recovery is entered. After the error is recovered, the control state of the copyright of the output port is set and 405 is performed. When it is determined that the output port is not a high definition output port, the control state of the copyright of the output port can be directly set, and then 405 is performed.
405: Perform decoding and outputting, and enter a playback state.

Optionally, if a decoder can simultaneously perform video decoding of two or more channels, that is, a set-top box includes multiple decoders, audio and video information of an adjacent channel may be directly decoded into a buffer. When a switching instruction is received, content of a specified channel is directly displayed, achieving an effect of seamless channel switching.

Optionally, a non-volatile storage medium is used as the buffer, and audio and video information that may be buffered by the storage medium lasts for several hours. When a user switches channels, media content buffered previously may be immediately played back, instead of only playing back content buffered after channel switching. In addition, because a switching process from live broadcast to time shifting does not exist, problems of jitter and pausing of audio and video information when just entering a time shifting state from live broadcast do not exist either. A working principle of time shifting is buffering data of a currently played program into a hard disk, and a user may switch a live broadcast state to a time shifting mode by using a playback key to play back a program played just now, for example, repeatedly enjoying a scene of shooting a goal in a soccer game. Because time shifting data buffering starts after channel switching, a time shifting mode cannot be entered by means of a playback operation unless a period of time elapses after a channel switching operation is performed, and only content that has been viewed by the user can be played back. In addition, when the time shifting state is entered from live broadcast, a problem of jitter or pausing of audio and video information occurs.

It should be noted that, after switching to a target channel is performed, buffering of another adjacent channel originally buffered together with the channel stops, and an adjacent channel of the target channel is buffered, that is, 301 to 310 and 401 to 405 of this embodiment are performed.

According to the method for improving a channel switching speed provided in this embodiment of the present invention, when a current program is played, audio and video information of a preset channel is recorded in advance into a buffer. In this way, when a target channel to which switching is to be performed as indicated by a received switching instruction input by a user is included in the preset channel, buffered audio and video information of the target channel is directly acquired. Therefore, before the switching instruction is received, it is ensured in the background that program playback of the target channel is in a ready state, which can significantly improve a channel switching speed.

Preferably, the method for improving a channel switching speed provided in this embodiment of the present invention is applied to a set-top box. A low noise block resource in the set-top box is used to lock a frequency; a condition receiving management module is configured to acquire CA authentication information and perform CA descrambling; a demultiplexer is configured to receive and filter audio and video information of a preset channel; and a decoder is configured to decode the audio and video information, to output decoded audio and video information. Types of set-top boxes are different, and the numbers of low noise blocks and decoders that are included in the set-top boxes are different, for example, the set-top boxes include a set-top box with one low noise block and one decoder, a set-top box with two low noise blocks and one decoder, a set-top box with multiple low noise blocks and one decoder, and the like, and the multiple low noise blocks may indicate that the number of the low noise blocks is greater than or equal to three.

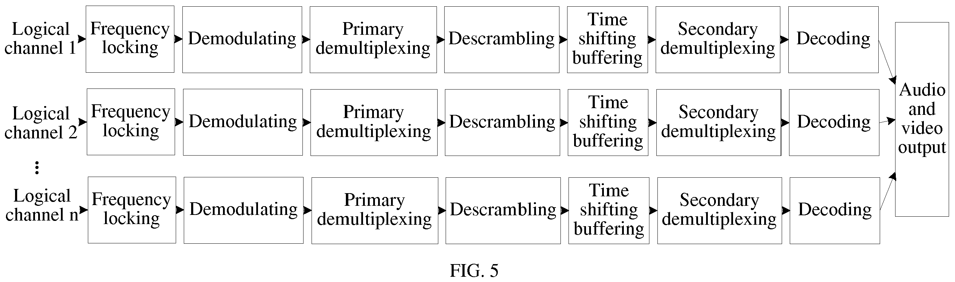

Optionally, when the set-top box with multiple low noise blocks and one decoder performs a channel switching operation, as shown in FIG. 5, an operation procedure of switching channels is divided into: locking a frequency, demodulating, primary demultiplexing, descrambling, buffering, secondary demultiplexing, decoding, and outputting audio and video information according to a working principle of the set-top box. With reference to the description of the foregoing embodiment, the locking a frequency is locking a frequency of a channel, which is implemented by applying for an idle low noise block resource from a low noise block resource management module. The demodulating is an operation that must be performed after the frequency is locked, and this process is not described in the foregoing embodiment. The demultiplexing corresponds to the foregoing process of filtering and receiving audio and video information of a preset channel after PSI information is received. The descrambling is CA descrambling. Then, descrambled audio and video information is buffered. The secondary demultiplexing is filtering the buffered audio and video information, to decode the filtered audio and video information. Eventually, decoded audio and video information is output, that is, the foregoing stage of outputting the audio and video information.

Another embodiment of the present invention provides a method for improving a channel switching speed, and the method can be applied to a specific example. In this embodiment, description is made by using an example in which the method is applied to a set-top box with three low noise blocks and one decoder, that is, the set-top box may lock frequencies of three channels simultaneously, and it is assumed that three idle low noise block resources exist. In this example, a currently played program is a program with a logical channel number N2, and adjacent channels are channels with logical channel numbers N1 and N3.

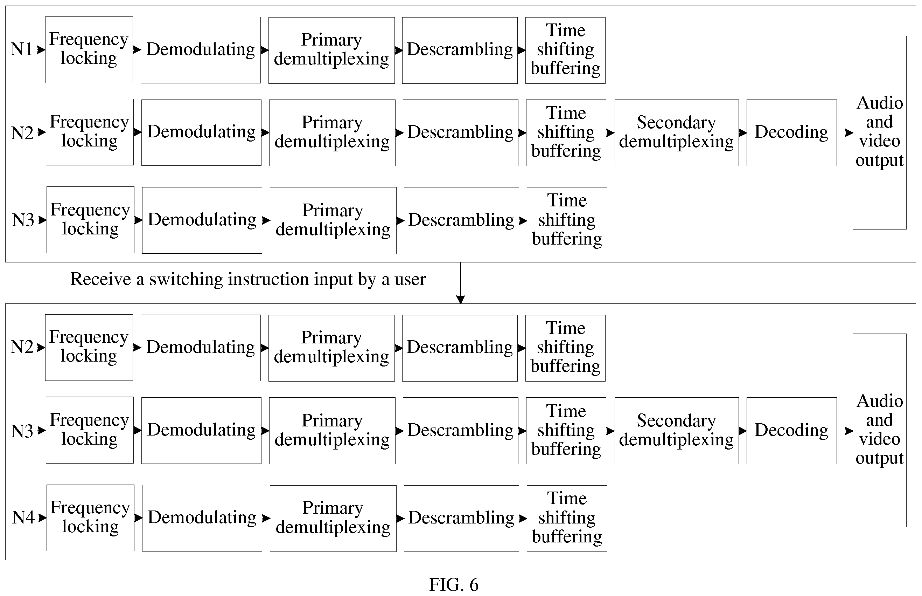

It should be noted that, in this example, the set-top box has three low noise blocks and one decoder, and then it may be determined that frequencies of logical channel numbers N1, N2, and N3 can be locked. With reference to the description of FIG. 5, as shown in FIG. 6, in this embodiment, a channel switching procedure is also described from aspects of locking a frequency, demodulating, primary demultiplexing, descrambling, buffering, secondary demultiplexing, decoding, and outputting audio and video information, and each logical channel number corresponds to a group of the foregoing procedures. Further, when a received switching instruction input by a user indicates switching to N3, buffering of a program of the channel N1 stops, and buffering of a program with a logical channel number N4 starts. In this way, when the user switches channels, a channel switching speed can be significantly improved, efficiency of the set-top box is improved, and therefore user's time is saved.

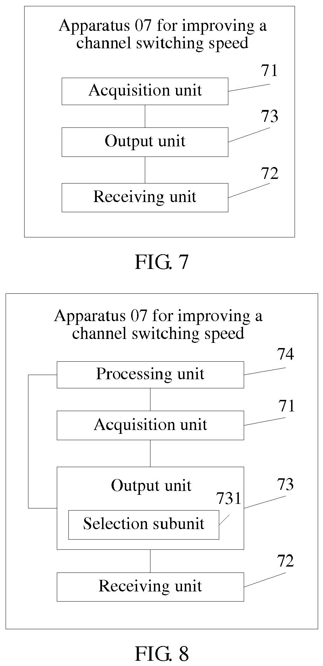

Another embodiment of the present invention provides an apparatus 07 for improving a channel switching speed. As shown in FIG. 7, the apparatus includes: an acquisition unit 71, a receiving unit 72, and an output unit 73.

The acquisition unit 71 is configured to acquire first information of a preset channel.

The first information includes at least one type of the following: conditional access CA authentication information, adults-only rating information, and output port copyright control information that correspond to the preset channel, and may further include any one type or several types of the other types of information according to an actual situation.

Optionally, the preset channel refers to adjacent channels of a currently played channel. The adjacent channels refer to two channels whose logical channel numbers are adjacent to that of the currently played channel.

During a practical application process, that a user switches channels by pressing up and down keys is the most common channel switching method. Because a behavior of switching channels by the user by pressing a number key is unpredictable, that is, in this case, a target channel indicated by a switching instruction is uncertain, and to save storage space and improve working efficiency of a device, it is unnecessary to classify all channels into the preset channel. In this embodiment of the present invention, the preset channels are the adjacent channels, and the adjacent channels are the two channels whose logical numbers are adjacent to that of the currently played channel, that is, the adjacent channels are channels indicated by up and down keys of the currently played channel.

The receiving unit 72 is configured to receive a switching instruction input by a user.

The switching instruction indicates switching to the target channel.

The output unit 73 is configured to: when it is determined that the target channel is included in the preset channel, output audio and video information of the target channel according to the switching instruction received by the receiving unit 72 and the first information acquired by the acquisition unit 71, so that a multimedia playback device plays the audio and video information of the target channel.

Optionally, as shown in FIG. 8, the apparatus further includes: a processing unit 74, and the output unit 73 further includes a selection subunit 731.

Optionally, the acquisition unit 71 is further configured to acquire audio and video information of the preset channel.

The processing unit 74 is configured to: after the acquisition unit 71 acquires the first information of the preset channel, descramble and buffer the audio and video information of the preset channel, and is further configured to decode the audio and video information of the target channel in the audio and video information of the preset channel that is acquired by the acquisition unit 71.

The selection subunit 731 is configured to select a start position for playback.

The start position indicates a position from which an image group that is closest to a current playback time and can be used for decoding starts. With reference to the content in FIG. 1, the start position herein is the same as the description corresponding to T8, and is not described herein again.

Optionally, the output unit 73 is specifically configured to output audio and video information of the target channel that is obtained after decoding by the processing unit 74.

According to the apparatus for improving a channel switching speed provided in this embodiment of the present invention, before a receiving unit receives a switching instruction input by a user, an acquisition unit acquires CA authentication information, adults-only rating information, and output port copyright control information of a preset channel, so that a processing unit descrambles and buffers audio and video information of the preset channel, and when the receiving unit receives the switching instruction indicating the preset channel, and a target channel indicated by the switching instruction is included in the preset channel, the processing unit decodes audio and video information of the target channel, so that an output unit outputs decoded audio and video information of the target channel. However, in the prior art, a channel switching speed can be improved only by shortening a short time in a channel switching process. In the technical solution of the present invention, a channel switching time in the channel switching process is further shortened, thereby significantly improving the channel switching speed.

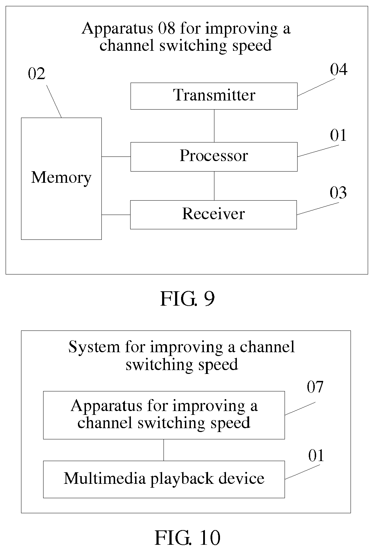

An embodiment of the present invention provides an apparatus 08 for improving a channel switching speed. As shown in FIG. 9, the apparatus includes: a processor 01, a memory 02, a receiver 03, and a transmitter 04.

The processor 01 is configured to acquire first information of a preset channel, and is further configured to: when it is determined that a target channel is included in the preset channel, output audio and video information of the target channel according to the first information and a switching instruction that is received by the receiver 03.

The memory 02 is configured to store the first information of the preset channel that is acquired by the processor 01, the switching instruction received by the receiver 03, and to-be-output audio and video information of the target channel.

Optionally, the first information includes at least one type of the following: conditional access CA authentication information, adults-only rating information, and output port copyright control information that correspond to the preset channel, and may further include any one type or several types of the other types of information according to an actual situation. The preset channel refers to adjacent channels of a currently played channel. The adjacent channels refer to two channels whose logical channel numbers are adjacent to that of the currently played channel.

Optionally, the processor 01 is further configured to acquire the preset channel; determine whether a frequency of the preset channel is locked; when the frequency is not locked, apply for an idle low noise block resource; when an idle low noise block resource is acquired or the frequency of the preset channel is locked, acquire PSI of the preset channel; filter audio and video information of a program of the preset channel; apply for a CA authentication operation for the program of the preset channel, to acquire CA authentication information; when CA authentication succeeds, determine whether a to-be-buffered program of the preset channel is restricted by adults-only rating; when it is determined that the program of the preset channel is restricted by adults-only rating, acquire adults-only rating information; and when it is determined that the program of the preset channel is not restricted by adults-only rating, determine whether a copyright of an output port of the preset channel is controlled, and when it is determined that the copyright of the output port is controlled, acquire output port copyright control information.

The processor 01 is further configured to acquire audio and video information of the preset channel, and after the first information of the preset channel is acquired, descramble and buffer the audio and video information of the preset channel according to the first information.

The memory 02 is configured to store a logical channel number of the preset channel and the audio and video information of the preset channel; an idle low noise block resource; PSI of the preset channel; audio and video information of a program of the preset channel; CA authentication information; adults-only rating information; and output port copyright control information.

The receiver 03 is configured to receive the switching instruction input by a user.

The switching instruction indicates switching to the target channel.

Optionally, the processor 01 is further configured to: after the first information of the preset channel is acquired, and when the copyright of the output port of the preset channel is not controlled, descramble and buffer the audio and video information of the preset channel; and after the receiver 03 receives the switching instruction, determine whether the target channel is included in the preset channel, and when it is determined that the target channel is included in the preset channel, play the audio and video information according to the switching instruction and the first information; and is further configured to select a start position for playback.

The start position indicates a position from which an image group that is closest to a current playback time and can be used for decoding starts.

Specifically, the processor 01 is further configured to determine whether a CA authentication error occurs; determine whether the program of the preset channel is restricted by adults-only rating when it is determined that the CA authentication error does not exist or after the CA authentication error is removed; when it is determined that the program of the preset channel is restricted by adults-only rating, prompt the user to input a password, and acquire the buffered audio and video information after the user inputs a correct password; and determine whether the copyright of the output port is controlled, and when it is determined that the copyright of the output port is not controlled or after control over the copyright of the output port is removed, decode acquired descrambled audio and video information and output decoded audio and video information, to enter a playback state.

The transmitter 04 is configured to send CA authentication error information and adults-only rating information to a user interface; and send the audio and video information of the target channel that is obtained after decoding by the processor 01, to a multimedia playback device.

The receiver 03 is further configured to receive the password that is input by the user as prompted by the processor 01.

Optionally, the memory 02 is configured to store the audio and video information obtained after descrambling by the processor 01; the switching instruction that is input by the user and received by the receiver 03; the selected start position for playback; and the password input by the user.

According to the apparatus for improving a channel switching speed provided in this embodiment of the present invention, a processor acquires CA authentication information, adults-only rating information, and output port copyright control information of a preset channel, and descrambles and buffers audio and video information of the preset channel; when a receiver receives a switching instruction indicating the preset channel, and determines that a target channel indicated by the switching instruction is included in the preset channel, the processor decodes audio and video information of the target channel according to first information; and a transmitter sends decoded audio and video information to a multimedia playback device. However, in the prior art, a channel switching speed can be improved only by shortening a short time in a channel switching process. In the technical solution of the present invention, a channel switching time in the channel switching process is further shortened, thereby significantly improving the channel switching speed.

An embodiment of the present invention further provides a system for improving a channel switching speed. As shown in FIG. 10, the system includes the apparatus 07 for improving a channel switching speed and a multimedia playback device 01, or the apparatus 08 for improving a channel switching speed and a multimedia playback device 01.

In FIG. 10, the system for improving a channel switching speed including the apparatus 07 for improving a channel switching speed and the multimedia playback device 01 is used as an example. Because a structure of a system for improving a channel switching speed including the apparatus 08 for improving a channel switching speed and the multimedia playback device 01 is the same as that of the system described in FIG. 10, the accompanying drawing is not described herein again.

The apparatus 07 for improving a channel switching speed includes the foregoing units 71 to 74. The apparatus 08 for improving a channel switching speed includes the processor 01, the memory 02, the receiver 03, and the transmitter 04. The multimedia playback device 01 is configured to receive audio and video information of the target channel that is output by the apparatus for improving a channel switching speed, and play the audio and video information. Optionally, the multimedia playback device 01 includes, but is not limited to, a mobile phone, a tablet computer, a notebook computer, or the like.

Based on the foregoing descriptions of the implementation manners, a person skilled in the art may clearly understand that the present invention may be implemented by software in addition to necessary universal hardware or by hardware only. In most circumstances, the former is a preferred implementation manner. Based on such an understanding, the technical solutions of the present invention essentially or the part contributing to the prior art may be implemented in a form of a software product. The software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for improving a channel switching speed, comprising:
acquiring first information of a preset channel (201),
wherein the first information comprises: conditional access, CA, authentication information, adults-only rating information, and output port copyright control information that correspond to the preset channel;
a buffering stage, which includes:
acquiring the preset channel (301);
determining whether a frequency of the preset channel is locked (302);
applying for an idle low noise block resource to lock the frequency of preset channel when the frequency of the preset channel is not locked (303);
acquiring Program Specific Information PSI of the preset channel when the frequency of the preset channel is locked (304);
acquiring audio and video information of the preset channel (305);
applying for a CA authentication operation for the program of the preset channel (306): if CA authentication fails, CA authentication error information is recorded and a state of waiting for error recovery is entered, so as to acquire CA authentic authentication information;
determining whether a to-be-buffered program of the preset channel is restricted by adults-only rating when the CA authentication succeeds (307): when it is determined that the to-be-buffered program of the preset channel is restricted by adults-only rating, the adults-only rating information is recorded, so as to acquire the adults-only rating information; and
determining whether a copyright of an output port of the preset channel is controlled (308): when it is determined that the copyright of the output port is controlled, the output port copyright control information is recorded, so as to acquire output port copyright control information;
receiving a switching instruction input by a user (202), wherein the switching instruction indicates switching to a target channel; and
when it is determined that the target channel is comprised in the preset channel, outputting audio and video information of the target channel according to the switching instruction and the first information (203), so that a multimedia playback device plays the audio and video information of the target channel.

2. The method for improving a channel switching speed according to claim 1, wherein the preset channel comprises adjacent channels of a currently played channel.

3. The method for improving a channel switching speed according to claim 2, wherein the method further comprises:
acquiring audio and video information of the preset channel; and
after the first information of the preset channel is acquired, descrambling and buffering the audio and video information of the preset channel.

4. The method for improving a channel switching speed according to claim 3, further comprising:
selecting a start position for playback, wherein the start position indicates a position from which an image group that is closest to a current playback time and can be used for decoding starts.

5. The method for improving a channel switching speed according to claim 4, further comprising:
decoding the audio and video information of the target channel, and outputting decoded audio and video information of the target channel.

6. An apparatus for improving a channel switching speed, comprising:
an acquisition unit (71), configured to acquire first information of a preset channel,
wherein the first information comprises: conditional access CA authentication information, adults-only rating information, and output port copyright control information that correspond to the preset channel;
a processing unit (74) and the acquisition unit (71) are further configured to
acquire the preset channel;
determine whether a frequency of the preset channel is locked;
apply for an idle low noise block resource to lock the frequency of preset channel when the frequency of the preset channel is not locked;
acquire Program Specific Information PSI of the preset channel when the frequency of the preset channel is locked;
acquire audio and video information of the present channel;
apply for a CA authentication operation for the program of the preset channel: if CA authentication fails, record CA authentication error information and enter a state of waiting for error recovery, so as to acquire CA authentic authentication information;
determine whether a to-be-buffered program of the preset channel is restricted by adults-only rating when the CA authentication succeeds: when it is determined that the to-be-buffered program of the preset channel is restricted by adults-only rating, record the adults-only rating information, so as to acquire the adults-only rating information;
determine whether a copyright of an output port of the preset channel is controlled: when it is determined that the copyright of the output port is controlled, record the output port copyright control information, so as to acquire output port copyright control information;
a receiving unit (72), configured to receive a switching instruction input by a user, wherein the switching instruction indicates switching to a target channel; and
an output unit (73), configured to: when it is determined that the target channel is comprised in the preset channel, output audio and video information of the target channel according to the switching instruction received by the receiving unit and the first information acquired by the acquisition unit, so that a multimedia playback device plays the audio and video information of the target channel.

7. The apparatus according to claim 6, wherein the preset channel comprises adjacent channels of a currently played channel.

8. The apparatus according to claim 7, wherein:
the acquisition unit is further configured to acquire audio and video information of the preset channel; and
the processing unit (74), is configured to: after the acquisition unit acquires the first information of the preset channel, descramble and buffer the audio and video information of the preset channel.

9. The apparatus according to claim 8, wherein the output unit comprises:
a selection subunit (731), configured to select a start position for playback, wherein the start position indicates a position from which an image group that is closest to a current playback time and can be used for decoding starts.

10. The apparatus according to claim 9, wherein :
the processing unit is further configured to decode the audio and video information of the target channel in the audio and video information of the preset channel that is acquired by the acquisition unit; and
the output unit is specifically configured to output audio and video information of the target channel that is obtained after the decoding by the processing unit.

11. A system for improving a channel switching speed, wherein the system comprises the apparatus for improving a channel switching speed according to any one of claims 6 to 10 and a multimedia playback device, wherein the multimedia playback device is configured to play audio and video information that is output by the apparatus for improving a channel switching speed.

## Patentansprüche

1. Verfahren zum Verbessern einer Kanalumschaltgeschwindigkcit, das Folgendes umfasst;
Erfassen erster Informationen eines im Voraus eingestellten Kanals (201),
wobei die ersten Informationen Folgendes enthalten: Authentifizierungsinformationen für bedingten Zugriff, CA-Authentifizierungsinformationen, Informationen über die "Nur für Erwachsene"-Einstufung und Ausgangsport-Copyright-Kontrollinformationen, die dem im Voraus eingestellten Kanal entsprechen;
eine Pufferungsstufe, die Folgendes enthält:
Erfassen des im Voraus eingestellten Kanals (301);
Bestimmen, ob eine Frequenz des im Voraus eingestellten Kanals verriegelt ist (302); Anwenden eines Leerlaufniedriggeräusch-Blockbetriebsmittels, um die Frequenz des im Voraus eingestellten Kanals zu verriegeln, wenn die Frequenz des im Voraus eingestellten Kanals nicht verriegelt ist (303);
Erfassen programmspezifischer Informationen, PSI, des im Voraus eingestellten Kanals, wenn die Frequenz des im Voraus eingestellten Kanals verriegelt ist (304);
Erfassen von Audio- und Videoinformationen des im Voraus eingestellten Kanals (305);
Anwenden einer CA-Authentifizierungsoperation für das Programm des im Voraus eingestellten Kanals (306): falls die CA-Authentifizierung scheitert, Aufzeichnen von CA-Authentifizierungsfchlerinformationen und Eintreten in einen Wartezustand für eine Fehlerwiederherstellung, um so authentische CA-Authentifizierungsinformationen zu erfassen;
Bestimmen, ob ein zu pufferndes Programm des im Voraus eingestellten Kanals durch eine "Nur für Erwachsene"-Einstufung beschränkt ist, wenn die CA-Authentifizierung erfolgreich ist (307): wenn bestimmt wird, dass das zu puffernde Programm des im Voraus eingestellten Kanals durch eine "Nur für Erwachsene"-Einstufung beschränkt ist, Aufzeichnen der "Nur für Erwachsene"-Einstufungsinformationen, um so die "Nur für Verwachsene"-Einstufungsinformationen zu erfassen; und
Bestimmen, ob ein Copyright eines Ausgangsports des im Voraus eingestellten Kanals kontrolliert wird (308): wenn bestimmt wird, dass das Copyright des Ausgangsports kontrolliert wird, Aufzeichnen der Ausgangsport-Copyright-Kontrollinformationen, um so Ausgangsport-Copyright-Kontrollinformationen zu erfassen;
Empfangen eines Umschaltbefehls, der durch einen Anwender eingegeben wird (202), wobei der Umschaltbefehl ein Umschalten zu einem Zielkanals angibt; und
wenn bestimmt wird, dass der Zielkanal in dem im Voraus eingestellten Kanal enthalten ist, Ausgeben von Audio- und Videoinformationen des Zielkanals in Übereinstimmung mit dem Umschaltbefehl und den ersten Informationen (203), so dass eine Multimedia-Wiedergabevorrichtung die Audio- und Videoinformationen des Zielkanals abspielt.

2. Verfahren zum Verbessern einer Kanalumschaltgeschwindigkeit nach Anspruch 1, wobei der im Voraus eingestellte Kanal benachbarte Kanäle eines aktuell abgespielten Kanals enthält.

3. Verfahren zum Verbessern einer Kanalumschaltgeschwindigkeit nach Anspruch 2, wobei das Verfahren ferner Folgendes umfasst:
Erfassen von Audio- und Videoinformationen des im Voraus eingestellten Kanals; und
nach dem Erfassen der ersten Informationen des im Voraus eingestellten Kanals Entwürfeln und Puffern der Audio- und Videoinformationen des im Voraus eingestellten Kanals.

4. Verfahren zum Verbessern einer Kanalumschaltgeschwindigkeit nach Anspruch 3, das ferner Folgendes umfasst:
Auswählen einer Startposition für die Wiedergabe, wobei die Startposition eine Position angibt, ab der eine Bildgruppe beginnt, die sich am nächsten bei einer aktuellen Wiedergabezeit befindet und für die Decodierung verwendet werden kann.

5. Verfahren zum Verbessern einer Kanalumschaltgeschwindigkeit nach Anspruch 4, das ferner Folgendes umfasst:
Decodieren der Audio- und Videoinformationen des Zielkanals und Ausgeben decodierter Audio- und Videoinformationen des Zielkanals.

6. Vorrichtung zum Verbessern einer Kanalumschaltgeschwindigkeit, die Folgendes umfasst:
eine Erfassungseinheit (71), die konfiguriert ist, erste Informationen eines im Voraus eingestellten Kanals zu erfassen,
wobei die ersten Informationen Folgendes enthalten: Authentifizierungsinformationen für bedingten Zugriff, CA-Authentifizierungsinformationen, "Nur für Erwachsene"-Einstufungsinformationen und Ausgangsport-Copyright-Kontrollinformationen, die dem im Voraus eingestellten Kanal entsprechen;
wobei eine Verarbeitungseinheit (74) und die Erfassungseinheit (71) ferner konfiguriert sind,
den im Voraus eingestellten Kanal zu erfassen,
zu bestimmen, ob eine Frequenz des im Voraus eingestellten Kanals verriegelt ist;
ein Leerlaufniedriggeräusch-Blockbetriebsmittel anzuwenden, um die Frequenz des im Voraus eingestellten Kanals zu verriegeln, wenn die Frequenz des im Voraus eingestellten Kanals nicht verriegelt ist;
programmspezifische Informationen, PSI, des im Voraus eingestellten Kanals zu erfassen, wenn die Frequenz des im Voraus eingestellten Kanals verriegelt ist;
Audio- und Videoinformationen des im Voraus eingestellten Kanals zu erfassen;
eine CA-Authentifizierungsoperation für das Programm des im Voraus eingestellten Kanals abzuwenden: falls die CA-Authentifizierung scheitert, Aufzeichnen von CA-Authentifizierungsfehlerinformationen und Eintreten in einen Zustand des Wartens auf eine Fehlerwiederherstellung, um so authentische CA-Authentifizierungsinformationen zu erfassen;
zu bestimmen, ob ein zu pufferndes Programm des im Voraus eingestellten Kanals durch eine "Nur für Erwachsene"-Einstufung beschränkt ist, wenn die CA-Authentifizierung erfolgreich ist: wenn bestimmt wird, dass das zu puffernde Programm des im Voraus eingestellten Kanals durch die "Nur für Erwachsene"-Einstufung beschränkt ist, Aufzeichnen der "Nur für Erwachsene"-Einstufungsinformationen, um so die "Nur für Erwachsene"-Einstufungsinformationen zu erfassen;
zu bestimmen, ob ein Copyright eines Ausgangsports des im Voraus eingestellten Kanals kontrolliert wird: wenn bestimmt wird, dass das Copyright des Ausgangsports kontrolliert wird, Aufzeichnen der Ausgangsport-Copyright-Kontrollinformationen, um so die Ausgangsport-Copyright-Kontrollinformationen zu erfassen;
eine Empfangseinheit (72), die konfiguriert ist, einen Umschaltbefehl, der von einem Anwender eingegeben wird, zu empfangen, wobei der Umschaltbefehl ein Umschalten zu einem Zielkanal angibt; und
eine Ausgangseinheit (73), die konfiguriert ist: dann, wenn bestimmt wird, dass der Zielkanals in dem im Voraus eingestellten Kanal enthalten ist, Audio- und Videoinformationen des Zielkanals in Übereinstimmung mit dem Umschaltbefehl, der von der Empfangseinheit empfangen wird, und mit den ersten Informationen, die durch die Erfassungseinheit erfasst werden, auszugeben, so dass eine Multimedia-Wiedergabevorrichtung die Audio- und Videoinformationen des Zielkanals wiedergibt.

7. Vorrichtung nach Anspruch 6, wobei der im Voraus eingestellte Kanal benachbarte Kanäle eines aktuell wiedergegebenen Kanals enthält.

8. Vorrichtung nach Anspruch 7, wobei:
die Erfassungseinheit ferner konfiguriert ist, Audio- und Videoinformationen des im Voraus eingestellten Kanals zu erfassen; und
die Verarbeitungseinheit (74) konfiguriert ist: die Audio- und Videoinformationen des im Voraus eingestellten Kanals zu entwürfeln und zu puffern, nachdem die Erfassungseinheit die ersten Informationen des im Voraus eingestellten Kanals erfasst hat.

9. Vorrichtung nach Anspruch 8, wobei die Ausgangseinheit Folgendes umfasst:
eine Auswahluntereinheit (731), die konfiguriert ist, eine Startposition für die Wiedergabe auszuwählen, wobei die Startposition eine Position angibt, ab der eine Bildgruppe beginnt, die sich am nächsten bei einer aktuellen Wiedergabezeit befindet und die für die Decodierung verwendet werden kann.

10. Vorrichtung nach Anspruch 9, wobei:
die Verarbeitungseinheit ferner konfiguriert ist, die Audio- und Videoinformationen des Zielkanals in den Audio- und Videoinformationen des im Voraus eingestellten Kanals, die durch die Erfassungseinheit erfasst werden, zu decodieren; und
die Ausgangseinheit insbesondere konfiguriert ist, Audio- und Videoinformationen des Zielkanals, die nach der Decodierung durch die Verarbeitungseinheit erhalten werden, auszugeben.

11. System zum Verbessern einer Kanalumschaltgeschwindigkeit, wobei das System die Vorrichtung zum Verbessern einer Kanalumschaltgeschwindigkeit nach einem der Ansprüche 6 bis 10 und einer Multimedia-Wiedergabevorrichtung enthält, wobei die Multimedia-Wiedergabevorrichtung konfiguriert ist, Audio- und Videoinformationen wiederzugeben, die durch die Vorrichtung zum Verbessern einer Kanalumschaltgeschwindigkeit ausgegeben werden.

## Revendications

1. Procédé d'amélioration d'une vitesse de changement de chaîne, le procédé comprenant :
l'acquisition de premières informations relatives à une chaîne préréglée (201),
les premières informations comprenant : des informations d'authentification d'accès conditionnel, dit CA, des informations de classification réservée aux adultes et des informations de contrôle de droit d'auteur de port de sortie qui correspondent à la chaîne préréglée ;
une étape de mise en tampon, comportant ;
l'acquisition de la chaîne préréglée (301) ;
la détermination si une fréquence de la chaîne préréglée est verrouillée (302) ;
la sollicitation d'une ressource de bloc à faible bruit inutilisée dans le but de verrouiller la fréquence de la chaîne préréglée lorsque la fréquence de la chaîne préréglée n'est pas verrouillée (303) ;
l'acquisition d'informations spécifiques de programme, dites PSI, relatives à la chaîne préréglée lorsque la fréquence de la chaîne préréglée est verrouillée (304) ;
l'acquisition d'informations audio et vidéo relatives à la chaîne préréglée (305) ;
la sollicitation d'une opération d'authentification de CA pour le programme de la chaîne préréglée (306) : en cas d'échec de l'authentification de CA, la consignation d'informations d'erreur d'authentification de CA et l'adoption d'un état d'attente de reprise sur erreur, dans le but d'acquérir des informations d'authentification de CA légitimes ;
la détermination si un programme à mettre en tampon de la chaîne préréglée est restreint par une classification réservée aux adultes en cas de succès de l'authentification de CA (307) : en cas de détermination que le programme à mettre en tampon de la chaîne préréglée est restreint par une classification réservée aux adultes, la consignation des informations de classification réservée aux adultes, dans le but d'acquérir les informations de classification réservée aux adultes ; et
la détermination si un droit d'auteur d'un port de sortie de la chaîne préréglée est contrôlé (308) : en cas de détermination que le droit d'auteur du port de sortie est contrôlé, la consignation des informations de contrôle de droit d'auteur de port de sortie, dans le but d'acquérir des informations de contrôle de droit d'auteur de port de sortie ; et
la réception d'une instruction de changement entrée par un utilisateur (202), l'instruction de changement indiquant un changement sur une chaîne cible ; et
en cas de détermination que la chaîne cible est comprise dans la chaîne préréglée, la sortie d'informations audio et vidéo relatives à la chaîne cible selon l'instruction de changement et les premières informations (203), pour permettre ainsi à un dispositif de lecture multimédia de lire les informations audio et vidéo relatives à la chaîne cible.

2. Procédé d'amélioration d'une vitesse de changement de chaîne selon la revendication 1, dans lequel la chaîne préréglée comprend des chaînes adjacentes d'une chaîne en cours de lecture.

3. Procédé d'amélioration d'une vitesse de changement de chaîne selon la revendication 2, le procédé comprenant en outre :
l'acquisition d'informations audio et vidéo relatives à la chaîne préréglée ; et
suite à l'acquisition des premières informations relatives à la chaîne préréglée, le désembrouillage et la mise en tampon des informations audio et vidéo relatives à la chaîne préréglée.

4. Procédé d'amélioration d'une vitesse de changement de chaîne selon la revendication 3, comprenant en outre :
la sélection d'une position de départ pour la lecture, la position de départ indiquant une position de départ d'un groupe d'images le plus proche d'un instant de lecture actuel et utilisable en vue d'un décodage.

5. Procédé d'amélioration d'une vitesse de changement de chaîne selon la revendication 4, comprenant en outre :
le décodage des informations audio et vidéo relatives à la chaîne cible, et la sortie d'informations audio et vidéo décodées relatives à la chaîne cible.

6. Appareil d'amélioration d'une vitesse de changement de chaîne, l'appareil comprenant :
une unité d'acquisition (71), configurée pour acquérir des premières informations relatives à une chaîne préréglée,
les premières informations comprenant : des informations d'authentification d'accès conditionnel, dit CA, des informations de classification réservée aux adultes et des informations de contrôle de droit d'auteur de port de sortie qui correspondent à la chaîne préréglée ;
une unité de traitement (74) et l'unité d'acquisition (71) étant configurées en outre pour
acquérir la chaîne préréglée ;
déterminer si une fréquence de la chaîne préréglée est verrouillée ;
solliciter une ressource de bloc à faible bruit inutilisée dans le but de verrouiller la fréquence de la chaîne préréglée lorsque la fréquence de la chaîne préréglée n'est pas verrouillée ;
acquérir des informations spécifiques de programme, dites PSI, relatives à la chaîne préréglée lorsque la fréquence de la chaîne préréglée est verrouillée ;
acquérir des informations audio et vidéo relatives à la chaîne préréglée ;
solliciter une opération d'authentification de CA pour le programme de la chaîne préréglée : si l'authentification de CA échoue, consigner des informations d'erreur d'authentification de CA et adopter un état d'attente de reprise sur erreur, dans le but d'acquérir des informations d'authentification de CA légitimes ;
déterminer si un programme à mettre en tampon de la chaîne préréglée est restreint par une classification réservée aux adultes en cas de succès de l'authentification de CA : s'il est déterminé que le programme à mettre en tampon de la chaîne préréglée est restreint par une classification réservée aux adultes, consigner les informations de classification réservée aux adultes, dans le but d'acquérir les informations de classification réservée aux adultes ; et
déterminer si un droit d'auteur d'un port de sortie de la chaîne préréglée est contrôlé : s'il est déterminé que le droit d'auteur du port de sortie est contrôlé, consigner les informations de contrôle de droit d'auteur de port de sortie, dans le but d'acquérir des informations de contrôle de droit d'auteur de port de sortie ;
une unité de réception (72), configurée pour recevoir une instruction de changement entrée par un utilisateur, l'instruction de changement indiquant un changement sur une chaîne cible ; et
une unité de sortie (73), configurée pour : s'il est déterminé que la chaîne cible est comprise dans la chaîne préréglée, sortir des informations audio et vidéo relatives à la chaîne cible selon l'instruction de changement reçue par l'unité de réception et les premières informations acquises par l'unité d'acquisition, pour permettre ainsi à un dispositif de lecture multimédia de lire les informations audio et vidéo relatives à la chaîne cible.

7. Appareil selon la revendication 6, dans lequel la chaîne préréglée comprend des chaînes adjacentes d'une chaîne en cours de lecture.

8. Appareil selon la revendication 7, dans lequel :
l'unité d'acquisition est configurée en outre pour acquérir des informations audio et vidéo relatives à la chaîne préréglée ; et
l'unité de traitement (74) est configurée pour : après avoir acquis les premières informations relatives à la chaîne préréglée, désembrouiller et mettre en tampon les informations audio et vidéo relatives la chaîne préréglée.

9. Appareil selon la revendication 8, dans lequel l'unité de sortie comprend ;
une sous-unité de sélection (731), configurée pour sélectionner une position de départ pour la lecture, la position de départ indiquant une position de départ d'un groupe d'images le plus proche d'un instant de lecture actuel et utilisable en vue d'un décodage.

10. Appareil selon la revendication 9, dans lequel :
l'unité de traitement est configurée en outre pour décoder les informations audio et vidéo relatives à la chaîne cible dans les informations audio et vidéo relatives à la chaîne préréglée acquises par l'unité d'acquisition ; et
l'unité de sortie est plus particulièrement configurée pour sortir des informations audio et vidéo relatives à la chaîne cible obtenues suite au décodage par l'unité de traitement.

11. Système d'amélioration d'une vitesse de changement de chaîne, le système comprenant l'appareil d'amélioration d'une vitesse de changement de chaîne selon l'une quelconque des revendications 6 à 10 et un dispositif de lecture multimédia, le dispositif de lecture multimédia étant configuré pour lire des informations audio et vidéo sorties par l'appareil d'amélioration d'une vitesse de changement de chaîne.
